# EUROPÄISCHE PATENTSCHRIFT

(11) **EP 0 771 603 B1**
(45) Veröffentlichungstag und Bekanntmachung des Hinweises auf die Patenterteilung: **12.12.2001**
(21) Anmeldenummer: 96250199.5
(22) Anmeldetag: 12.09.1996
(51) Int. Cl.: B23D 25/12

(54) **Trommelschere zum Schneiden von schnell laufendem Band, insbesondere Warmband**
Drum shear for cutting quick travelling strip, especially hot strip
Cisaille à tambour pour la coupe de bande défilant rapidement, en particulier de bande à chaud

(30) Priorität: 31.10.1995 DE 19542173
(43) Veröffentlichungstag der Anmeldung: 07.05.1997
(73) Patentinhaber: SMS Demag AG, 40237 Düsseldorf (DE)
(72) Erfinder: Figge, Dieter, Dipl.-Ing., 25147 Essen (DE); Wessel, Karl-Heinz, Dipl.-Ing., 46537 Dinslaken (DE)
(74) Vertreter: Meissner, Peter E., Dipl.-Ing.

(56) Entgegenhaltungen:
- DE-A- 1 402 427
- DE-B- 1 281 794
- GB-A- 1 138 642

## Beschreibung

Die Erfindung betrifft eine Trommelschere zum Schneiden von schnell laufendem Band, insbesondere Warmband, mit in mindestens einer Messertrommel radial verschiebbar geführten Messem, die zum gewünschten Schnittzeitpunkt aus der Messertrommel heraus in Schnittstellung bewegbar sind; siehe DE-A 1 402 427,

Zum Schopfen und Teilen von Band, insbesondere Warmband, werden seit langem Trommelscheren eingesetzt. Sie arbeiten als Hochlaufscheren, d. h. die Trommeln beschleunigen in ca. 0,8 Trommelumdrehungen aus dem Stand auf die Walzgutdurchlaufgeschwindigkeit, schneiden das Walzgut und verzögern dann wieder. Bei Bandbreiten ab 1300 mm und bei einer Bandgeschwindigkeit von ca. 3 m/sek. ist eine Grenze erreicht, über der die enorme Antriebsenergie für diese Scheren nicht mehr aufgebracht werden kann. Um die Schwungmomente der rotierenden Massen zu beschleunigen und zu verzögem müssen kurzzeitig etwa 2000 kw Leistung aufgebracht werden. Auch beim Einsatz von sekundär geregelten Hydromotoren muß die entsprechende Pumpenkapazität für diese Leistung bereitgestellt werden. Selbst wenn man nur alle 10 Minuten schneidet und dann nur für ca. 0,5 sek. Beschleunigung und für 0,5 sek. Verzögerung benötigt wird, ist der technische Aufwand gewaltig.

Für die konventionellen Herstellungsprozesse mit Walzgutgeschwindigkeiten bis 3 m/sek. reichen in der Regel Hochlaufscheren aus, weil für das Auswalzen von Einzelbrammen ein Schneiden mit Haspelgeschwindigkeit nicht notwendig ist.

In verschiedenen neuen Herstellungsprozessen werden die Operationen Bandgießen und Umformen gekoppelt, so daß Band in kontinuierlichen Verfahrensschritten hergestellt wird. Das bedeutet aber, daß nicht mehr wie bisher Brammeneinsatzgewichte von 20 t einzeln zu Coils gewalzt werden, sondern es wird ein nahezu endloser Strang erzeugt, umgeformt und vor dem Haspeln quergeteilt. Dabei werden Bandgeschwindigkeiten von 4 bis 10 m/sek. und höher realisiert, die auch von der Schere vor dem Haspel entsprechende Leistungen fordern.

Zum Schneiden von schnell laufendem Walzgut sind sogenannte Zweitrommelscheren an sich bekannt, bei denen das zu schneidende Walzgut zwischen zwei Messertrommeln hindurchgeführt wird, die mit der Walzgutdurchlaufgeschwindigkeit entsprechenden Umfangsgeschwindigkeit umlaufen. Die Messer oder die diese Messer aufnehmenden Messerhalter sind dabei radial beweglich in den Messertrommeln gelagert und werden zum Schnitt radial aus der Trommel ausgefahren. Dazu sind hydraulische oder pneumatische Arbeitskolben oder auch Schwinghebel vorgesehen. Die Zweitrommelscheren brauchen nicht, wie die eingangs beschriebenen Hochlaufscheren, in kürzester Zeit auf die Walzgutdurchlaufgeschwindigkeit beschleunigt zu werden, vielmehr kann ein ungestörtes Hochlaufen der Messertrommeln erreicht werden, wonach die Messer innerhalb kürzester Zeit zu' einem gewünschten Zeitpunkt zum Schnitt gebracht werden.

Es ist auch schon vorgeschlagen worden, bei extrem hohen Durchlaufgeschwindigkeiten des Walzgutes die Messer von Zweitrommelscheren über einen schock- oder druckwellenbeaufschlagten Kolben in die Schneidstellung zu bringen (DE-AS 12 81 794).

Probleme der beschriebenen Zweitrommelscheren zum Schneiden von schnell laufendem Walzgut bestehen in der mechanischen Führung der Messer bzw. Messerhalter und in der hydraulischen Beaufschlagung der die Messer betätigenden Kolben. Die Mechanik und die Hydraulik sind häufig nicht in der Lage, die beim Schneiden, insbesondere von dickerem Walzgut, auftretenden hohen Schnittkräfte von 110 bis 300 t aufzunehmen, so daß deren Einsatz auf dünneres Walzgut oder schmale Streifen oder Draht beschränkt ist.

Es ist die Aufgabe der vorliegenden Erfindung, eine bekannte Trommelschere zum Schneiden von schnell laufendem Band so zu verbessern, daß ein funktionssicheres und exaktes Querteilen auch breiterer und dickerer Bänder mit einfachen konstruktiven Mitteln möglich ist.

Zur Lösung der Aufgabe wird erfindungsgemäß vorgeschlagen, daß zum Ein- und Ausfahren der Messer eine in der Messertrommel axial geführte Zug- und Druckstange vorgesehen ist, die sich mit Keilflächen an korrespondierenden Keilflächen am Messer oder Messerträger abstützt und daß die mit der Messertrommel rotierende Zug- und Druckstange über ein Axialkräfte übertragendes Drucklager mit einem stationären Linearantrieb verbunden ist.

Es hat sich gezeigt, daß die zum Ein- und Ausfahren der Messer wirkenden Keilflächen problemlos und in mechanisch einfacher Weise in der Lage sind, auch die hohen Schnittkräfte bis zu 300 t zu übertragen. Das Herstellen der Keilflächen ist mit Oberflächenbearbeitungsmaschinen einfach, die Führungen sind funktionssicher und wartungsarm. Der gesamte Antrieb ist preiswert herzustellen und unterliegt nur sehr geringem Verschleiß.

In einer besonderen Ausgestaltung der Erfindung ist vorgesehen, daß die Zug- und Druckstange im Querschnitt kastenförmig gestaltet ist, wobei die Deckelfläche einen Durchgriffspalt für das im Inneren der Zug- und Druckstange angeordnete Messer aufweist und sowohl die innere Bodenfläche wie die innere Deckelfläche neben dem Durchgriffspalt mit in Verschieberichtung ansteigenden, einander zugewandten Keilflächen versehen sind, die mit Keilflächen gleicher Steigung und Richtung korrespondieren, die einerseits an seitlichen Vorsprüngen des Messers oder Messerhalters und andererseits an dessen der inneren Bodenflächen zugewandten Seite angeordnet sind.

Die Erfindung läßt sich besonders dann günstig anwenden, wenn nach einem anderen Merkmal der Erfindung vorgesehen ist, daß die Messertrommel U-förmig ausgenommen ist und die im Qerschnitt kastenförmig gestaltet Zug- und Druckstange in Axialführungen in der Ausnehmung gleitend gegenüber dem radial verstellbaren Messer axial verschiebbar ist.

Die U-förmig gestaltete Messertrommel bietet zur Weiterleitung der hohen Schnittkräfte ein ausreichendes Widerstandsmoment, um diese Kräfte über die Lager in den Scherenständer zu übertragen. Dabei ist es günstig, daß die zur Verstellung des Messers vorgesehenen Keile nur vor und nach dem Schnitt bewegt werden und insbesondere während des Schnittes die Keile auf glatten Auflageflächen ruhen.

In einer günstigen Ausgestaltung der Erfindung ist vorgesehen, daß der stationäre Linearantrieb ein Hydrozylinder ist. Ein solcher starker Hydrozylinder kann auch in der geforderten kurzen Zeit problemlos die Verschiebung des Keiles herbeiführen, so daß das Messer zum Schnitt radial aus der Messertrommel ausgefahren werden kann.

Wenn nach einem anderen Merkmal der Erfindung vorgesehen ist, daß die Keilflächen während des Schnittes in vorübergehender Ruhestellung großflächig aufeinanderliegen, so wird sichergestellt, daß die nur vor und nach dem Schnitt bewegten Keile während des Schnitts die sehr hohen Schnittkräfte sicher übertragen.

Ein Ausführungsbeispiel der Erfindung ist in der Zeichnung dargestellt und wird nachfolgend beschrieben. Es zeigt:
- Fig. 1: eine Messertrommel einer erfindungsgemäßen Trommelschere im Querschnitt,
- Fig. 2: einen Längsschnitt durch die Messertrommel nach Figur 1,
- Fig. 3: eine Messertrommel nach der Erfindung mit kastenförmig gestalteter Zug- und Druckstange im Querschnitt und
- Fig. 4: einen Längsschnitt durch die Messertrommel nach Figur 3 und
- Fig. 5: die Zug- und Druckstange der Erfindung in drei Verschiebepositionen.

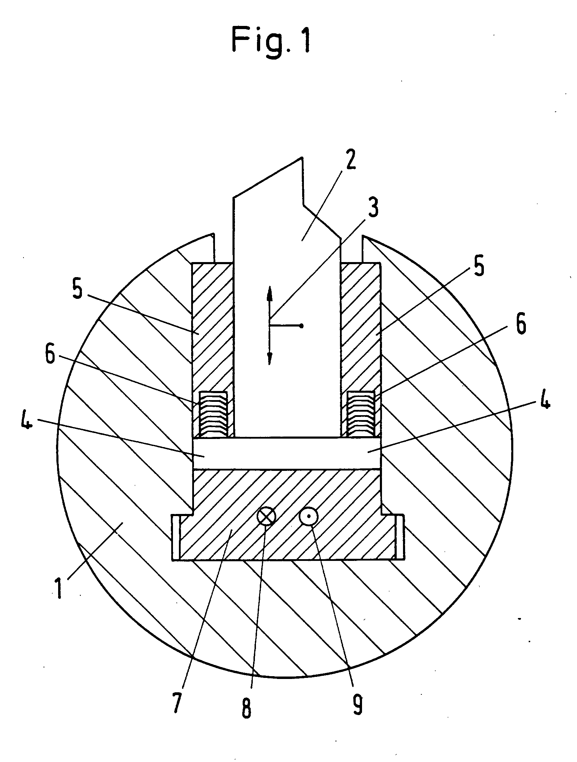

In Figur 1 ist grob schematisch der Querschnitt durch die Messertrommel einer erfindungsgemäßen Trommelschere dargestellt. Mit 1 ist der aus dem vollen gearbeitete Körper der Messertrommel bezeichnet, in den die Ausnehmung für das Messer eingearbeitet ist. Das Messer selbst ist mit 2 bezeichnet und in Pfeilrichtung mittels einer mit Keilen versehenen Zug- und Druckstange radial aus der Trommel heraus und in diese zurückbewegbar. Das Messer 2 weist im unteren Bereich seitliche Vorsprünge 4 auf, die in die Ausnehmung der Messertrommel eingesetzte obere Keile 5 hintergreifen. Zur Kompensation der Zentrifugalkräfte des Messers 2 bei der Rotation der Messertrommel 1 sind Tellerfedem 6 vorgesehen, die das Messer 2 über die seitlichen Vorsprünge 4 auf den unteren Keil 7 drücken, der wie bei 8 und 9 angedeutet, senkrecht zur Zeichenebene in der Ausnehmung in der Messertrommel 1 verschiebbar ist. Beim Verschieben des Keiles 7 bewegt sich das Messer 2 in Pfeilrichtung 3 nach außen bzw. wird zurückgeführt durch das Verschieben der Keile 5.

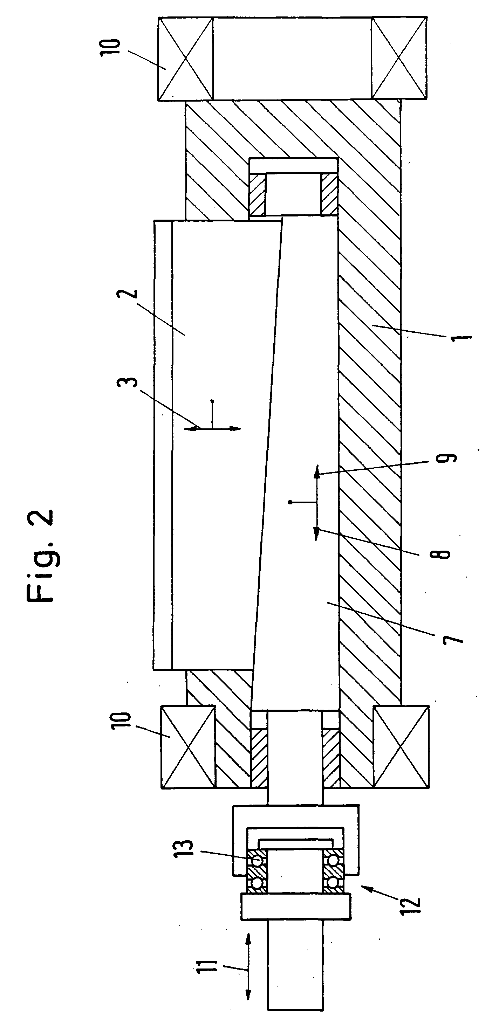

In Figur 2 ist ein Längsschnitt durch die Messertrommel 1 in Figur 1 dargestellt. Erkennbar ist die Messertrommel 1 in den Lagern 10, im nicht dargestellten Scherenständer, drehbar gelagert. Das Messer 2 ist in Pfeilrichtung 3 aus der Messertrommel 1 heraus und in diese herein bewegbar, wenn der Keil 7 in Pfeilrichtung 8 und 9 bewegt wird. Zur Bewegung des Keiles 7 ist ein nicht dargestellter, aber durch die Pfeile 11 angedeuteter Linearantrieb vorgesehen, der über ein Axialkräfte übertragendes Drucklager 12 mit Axialkugellagem 13 verbunden ist. Auf diese Weise kann über den Linearantrieb 11 der Keil 7 in Axialrichtung bewegt werden, ohne daß die Rotationsbewegung der Messertrommel 1 mit dem Messer 2 und dem Keil 7 behindert wird.

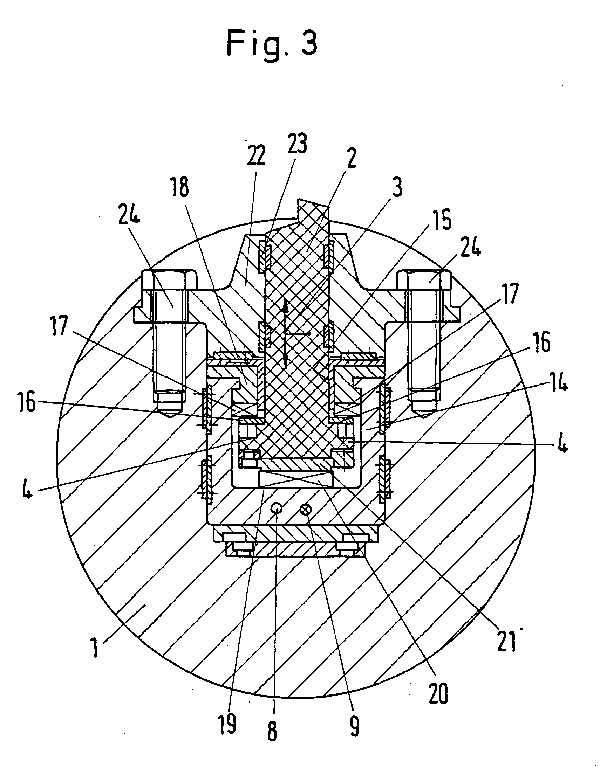

In Figur 3 ist eine kastenförmig ausgebildete Zug- und Druckstange in der U-förmig gestalteten Messertrommel 1 verschiebbar vorgesehen. In der Deckelfläche der Zug- und Druckstange ist bei 15 ein Durchgriffsspalt für das Messer 2 vorgesehen. Das Messer weist ebenfalls seitliche Vorsprünge 4 auf, die an ihrer dem Deckel zugewandten Seite bei 16 mit Keilen versehen sind, die mit ebensolchen Keilen 17 an der inneren Deckelfläche 18 korrespondieren. Die Keile 17 dienen zur Zwangs-Rückführung des Messers 2 aus der Schnitt- in die Ruheposition. Die innere Bodenfläche 19 der kastenförmigen Zug- und Druckstange ist mit einer Keilfläche 20 versehen, die mit einer entsprechenden Keilfläche 21 an der der Bodenseite 19 zugewandten Unterseite des Messers vorgesehen ist. Durch Verschieben der kastenförmigen Zug- und Druckstange in den Verschieberichtungen 8 und 9 wird über die Keilflächen ein radiales Ausfahren des Messers in Pfeilrichtung 3 bewirkt. Zur besseren Montage und zur radialen Führung des Messers 2 ist der Führungsdeckel 22 vorgesehen, der an seiner Innenseite mit Gleitführungen 23 für das Messer 2 versehen ist und seitlich bei 24 an der Messertrommel 1 befestigt ist.

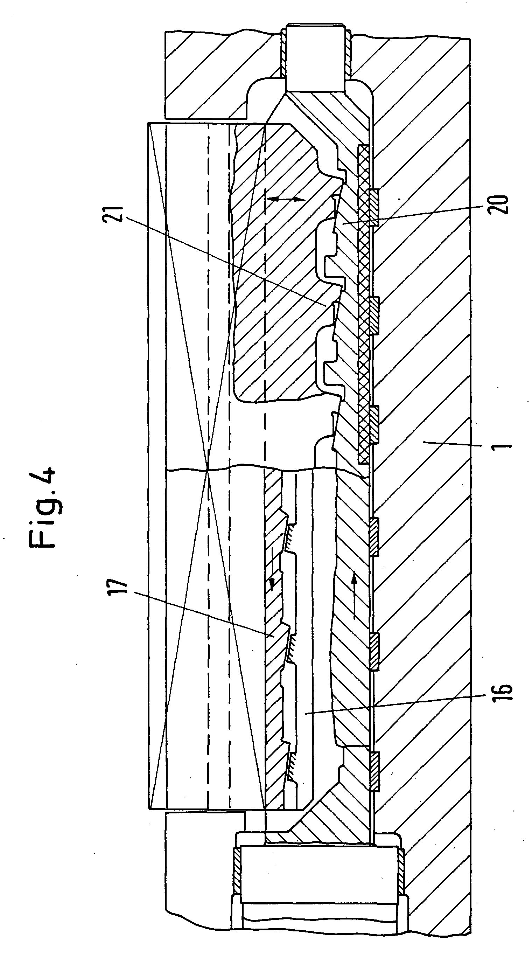

In Figur 4 ist in einem Längsschnitt durch die Messertrommel nach Fig. 3 die Funktionsweise der erfinderischen Vorrichtung sichtbar gemacht. Der Schnitt ist dabei so gelegt, daß in der linken Zeichnungshälfte die Keilflächen 16,17 zum Rückzug des Messers und in der rechten Zeichnungshälfte die Keilfläche 20,21 zum Ausfahren des Messers und zur Aufnahme der Schnittkräfte dargestellt sind.

In der Zeichnungsfigur 5 sind ist die besondere Ausbildung der Keilfläche zur Aufnahme der Schittkräfte beschrieben, wobei in drei Positionen die beiden Endstellungen sowie die Zwischenstellung der verschobenen Keilflächen 20,21 dargestellt sind. In der oberen Zeichnungsfigur befindet sich die Zug- und Druckstange in der linken Endstellung. Die Keilflächen 20, 21 tragen und drücken das Messer 2 nach außen. Durch Verschieben der Zug- und Druckstange (in der Zeichnungsfigur nach rechts) bewegen sich die Keilflächen 20 ebenfalls nach rechts und drücken über die korrespondierenden Keilflächen 21 das Messer 2 weiter nach außen. Dabei wird das Messer 2 zunächst um ca. 1 mm weiter radial aus der Messertrommel 1 ausgefahren, als dies zur nachfolgend beschriebenen Auflage während des Schnittes erforderlich ist. Das ermöglicht die Bewegung der mit 21a beschriebenen Horizontalflächen über die mit 20a beschriebenen, den Keilflächen 20 zugeordneten Horizontalflächen der Zug- und Druckstange hinweg.

In der in der unteren Zeichnungsfigur dargestellten Endstellung der Zug- und Druckstange in der äußerst rechten Position ist das Messer 2 infolge des Schnittdruckes um den zuvor beschriebenen Millimeter radial in die Messertrommel 1 zurückgefahren, so daß die horizontalen Flächen 20a und 21a aufeinanderliegend das Messer 2 tragen. Dadurch sind die Keilflächen 20, 21 frei von Schnittkräften gehalten, so daß keine Reaktionskräfte auf die Zug- und Druckstange und die dieser zugeordneten Antriebseinrichtungen übertragen werden.

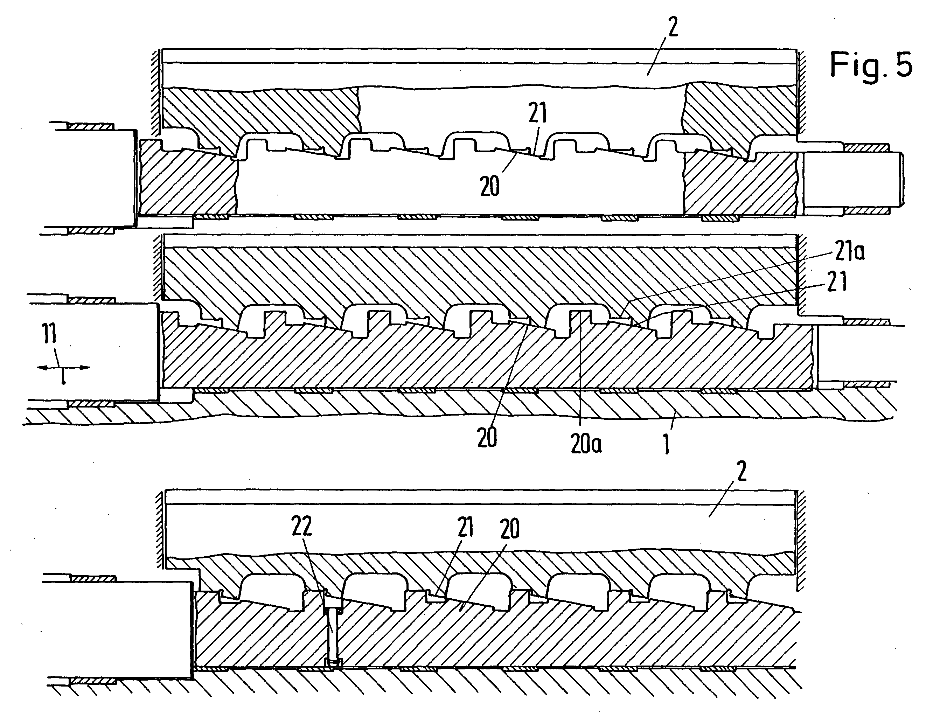

Zum radialen Einfahren der Messer dienen die Keilflächen 16 und 17 (Fig.4), die in der Endstellung der Zug- und Druckstange keinen Kontakt miteinander haben. Sobald der Schnittdruck auf das Messer 2 weg ist, drückt die Fliehkraft der umlaufenden Messertrommel 1 das Messer nach außen. Die Keilfläche 17 am Messer würde nach einem Verschiebeweg der Zug- und Druckstange gegen die Keilfläche 16 der Zug- und Druckstange drücken, wenn nicht die Fliehkraft und ein zusätzlicher Bolzen 22 (Figur 5, untere Darstellung) das Messer 2 nach außen drücken und zunächst die Anlage der Keilflächen 16 und 17 verhindern würde. Beim weiteren Verschieben der Zug- und Druckstange wird dann das Messer 2 über den Kontakt der Keilflächen 16, 17 zwangsgeführt nach innen gezogen, bis die Zug- und Druckstange 3 ihre Ausgangsposition erreicht hat und ein neues Arbeitsspiel beginnen kann.

## Patentansprüche

1. Trommelschere zum Schneiden von schnellaufendem Band, insbesondere Warmband, mit in mindestens einer Messertrommel (1) radial verschiebbar geführten Messern (2), die zum gewünschten Schnittzeitpunkt aus der Messertrommel heraus in Schnittstellung bewegbar sind,
**dadurch gekennzeichnet**
**daß** zum Ein- und Ausfahren der Messer (2) eine in der Messertrommel (1) axial geführte Zug- und Druckstange vorgesehen ist, die sich mit Keilflächen (5,7) an korrespondierenden Keilflächen am Messer (2) oder Messerträger abstützt und daß die mit der Messertrommel (1) rotierende Zug- und Druckstange über ein Axialkräfte übertragendes Drucklager (12) mit einem stationären Linearanrieb (11) verbunden ist.

2. Trommelschere zum Schneiden von schnellaufendem Band nach Anspruch 1,
**dadurch gekennzeichnet,**
**daß** Zug- und Druckstange im Querschnitt kastenförmig gestaltet ist, wobei die Deckelfläche (18) einen Durchgriffsspalt (15) für das im Inneren der Zug- und Druckstange angeordenete Messer (2) aufweist und sowohl die innere Bodenfläche (19) wie die innere Deckelfläche (18) neben dem Durchgriffsspalt (15) mit in Verschieberichtung ansteigenden, einander zugewandten Keilflächen (17,20) versehen sind, die mit Keilflächen (16,21) gleicher Steigung und Richtung korrespondieren, die einerseits an seitlichen Vorsprüngen (4) des Messers (2) oder Messerhalters und andererseits an dessen der inneren Bodenfläche (19) zugewandten Seite angeordnet sind.

3. Trommelschere zum Schneiden von schnellaufendem Band nach Anspruch 1 und 2,
**dadurch gekennzeichnet,**
**daß** die Messertrommel (1) U-förmig ausgenommen ist und die im Querschnitt kastenförmig gestaltete Zug- und Druckstange in Axilaführungen in der Ausnehmung gleitend gegenüber dem radial verstellbaren Messer (2) axial verschiebbar ist.

4. Trommelschere zum Schneiden von schnellaufendem Band nach Anspruch 1 bis 3,
**dadurch gekennzeichnet,**
**daß** der stationäre Linearantrieb (11) ein Hydrozylinder ist.

5. Trommelschere zum Schneiden von schnellaufendem Band nach Anspruch 1 bis 4,
**dadurch gekennzeichnet,**
**daß** den Keilflächen (5,7,17,20,16, 21) zugeordnete Horizontalflächen (20a, 21a) während des Schnittes in vorübergehender Ruhestellung aufeinander liegen.

## Claims

1. Drum shear for cutting quick-travelling strip, in particular hot strip, having blades (2) which are guided radially displaceably in at least one blade drum (1) and which are movable at the desired moment of cutting out of the blade drum into the cutting position, **characterised in that** for extending and retracting the blades (2) a pull and push rod guided axially in the blade drum (1) is provided, which bears with wedge faces (5, 7) on corresponding wedge faces on the blade (2) or blade carrier, and **in that** the pull and push rod rotating with the blade drum (1) is connected, via pressure bearings (12) transmitting axial forces, to a stationary linear drive (11).

2. Drum shear for cutting quick-travelling strip according to claim 1, **characterised in that** the pull and push rod is box-shaped in cross-section, the top face (18) having a gap (15) for penetration of the blade (2) disposed inside the pull and push rod, and both the inner bottom face (19) and the inner top face (18) being provided with, in addition to the gap (15), wedge faces (17, 20), which rise in the displacement direction, face on another, and correspond to wedge faces (16, 21) of the same pitch and direction, which are disposed on the one hand on lateral lugs (4) of the blade (2) or blade carrier and on the other hand on its side associated with the inner bottom face (19).

3. Drum shear for cutting quick-travelling strip according to claim 1 and 2, **characterised in that** the blade drum (1) is recessed in a U-shaped manner and the pull and push rod of box-shaped cross-section is displaceable relative to the radially adjustable blade (2) in axial guides so as to slide in the recess.

4. Drum shear for cutting quick-travelling strip according to claim 1 to 3, **characterised in that** the stationary linear drive (11) is a hydraulic cylinder.

5. Drum shear for cutting quick-travelling strip according to claim 1 to 4, **characterised in that** horizontal faces (20a, 21a) associated with the wedge faces (5, 7, 17, 20, 16, 21) rest on one another in a temporary rest position during cutting.

## Revendications

1. Cisaille à tambour pour couper un feuillard défilant rapidement, en particulier un feuillard chaud, comportant des lames (2) guidées de façon radialement déplaçable dans au moins un tambour à lames (1), lames qui sont déplaçables, à l'instant de coupe souhaité, du tambour à lames dans la position de coupe,
**caractérisée en ce que**, pour la rentrée et la sortie des lames (2), il est prévu une barre de traction et de pression guidée axialement dans le tambour à lames (1), qui s'appuie, par des surfaces en coin (5, 7), sur des surfaces en coin correspondantes sur la lame (2) ou le support de lame, et **en ce que** la barre de traction et de pression tournant avec le tambour à lames (1) est reliée, par l'intermédiaire d'un palier de pression (12) transmettant des forces axiales, à un entraînement linéaire fixe (11).

2. Cisaille à tambour pour couper un feuillard défilant rapidement selon la revendication 1,
**caractérisée en ce que** la barre de traction et de pression est réalisée, en section transversale, en forme de caisson, la surface de couvercle (18) présentant une fente de pénétration (15) pour la lame (2) agencée à l'intérieur de la barre de traction et de pression et aussi bien la surface de fond interne (19) que la surface de couvercle interne (18) étant munies, à côté de la fente de pénétration (15), de surfaces en coin (17, 20) en regard l'une de l'autre, montant dans la direction de déplacement, qui correspondent à des surfaces en coin (16, 21) de mêmes pente et direction, qui, d'une part, sont agencées sur des saillies latérales (4) de la lame (2) ou du support de lame et, d'autre part, sur sa face en regard de la surface de fond interne (19).

3. Cisaille à tambour pour couper un feuillard défilant rapidement selon les revendications 1 et 2,
**caractérisée en ce que** le tambour à lames (1) présente une forme de U, et la barre de traction et de pression réalisée en section transversale en forme de caisson est déplaçable axialement dans des guides axiaux dans l'évidement en glissant par rapport à la lame (2) radialement réglable.

4. Cisaille à tambour pour couper un feuillard défilant rapidement selon les revendications 1 à 3,
**caractérisée en ce que** l'entraînement linéaire fixe (11) est un vérin hydraulique.

5. Cisaille à tambour pour couper un feuillard défilant rapidement selon les revendications 1 à 4,
**caractérisée en ce que** des surfaces horizontales (20a, 21a) associées aux surfaces en coin (5, 7, 17, 20, 16, 21) reposent l'une sur l'autre pendant la coupe dans la position de repos transitoire.
